# EUROPEAN PATENT APPLICATION

(11) **EP 4 768 736 A1**
(43) Date of publication of application: **01.07.2026**
(21) Application number: 25226954.3
(22) Date of filing: 23.12.2025
(51) Int. Cl.: F04D 33/00, F04B 19/00, G10K 15/04, H04R 19/00

(54) **AIRFLOW GENERATING DEVICE WITH DIFFERENTIAL MODULATION DRIVING AND ASYMMETRIC INITIAL DEFLECTION**

(30) Priority: 27.12.2024 US 202463739137 P; 14.01.2025 US 202563744882 P; 21.12.2025 US 202519428297
(71) Applicant: xMEMS Labs, Inc., Santa Clara, CA 95051 (US)
(72) Inventor: Ren, Jye, 106 Taipei City (TW); Tseng, Kuan-Ju, 300 Hsinchu City (TW); Ng, Eldwin Jiaqiang, Sunnyvale, 94087 (US); Chang, Kai-Chieh, 30042 Hsinchu City (TW); Chen, Wen-Chien, 232 New Taipei City (TW); Lo, Chiung C., San Jose, 95124 (US); Lim, Martin George, Hillsborough, 94010 (US)
(74) Representative: Straus, Alexander

(57) **Abstract**

An airflow generating device includes a first cell, disposed within a first region and a second cell, disposed within a second region. The first cell generates a first air pressure with a first polarity in the first region and the second cell generates a second air pressure with a second polarity in the second region. The second polarity is opposite to the first polarity. One of the first and second cells includes a film structure, which includes a flap pair. The flap pair includes a first flap and a second flap opposite to each other. The flap pair possesses an initial deflection difference or exhibits an average displacement difference between the first flap and the second flap. The flap pair operates at an ultrasonic frequency, such that the airflow generating device produces a plurality of air pulses at an ultrasonic pulse rate.

## Description

### Field of the Invention

The present application relates to an airflow generating device, and more particularly, to an airflow generating device capable of providing significant airflow.

### Background of the Invention

Unless otherwise indicated herein, the approaches described in this section are not prior art to the claims in this application and are not admitted as prior art by inclusion in this section.

Air pulse generating (APG) devices generating air pulses have been developed. Besides audio application, air pulse generating devices may be used for airflow application. MEMS-fabricated (MEMS: Micro electro mechanical Systems) APG devices have recently attracted significant market attention due to tiny size and ability to generate airflow. To improve performance like heat dissipation, there is a high market demand for strong airflow. Providing significant airflow would be a challenge for micro devices using MEMS fabrication.

Therefore, how to design a MEMS device capable of providing significant airflow is an objective in the field.

### Summary of the Invention

It is therefore a primary objective of the present application to provide an airflow generating device, to improve over disadvantages of the prior art.

The present invention provides an airflow generating device, comprising a first cell, disposed within a first region; and a second cell, disposed within a second region; wherein the first cell generates a first air pressure with a first polarity in the first region and the second cell generates a second air pressure with a second polarity in the second region; wherein the second polarity is opposite to the first polarity; wherein one of the first and second cells comprises a film structure, the film structure comprises a flap pair, the flap pair comprises a first flap and a second flap opposite to each other; wherein the flap pair possesses an initial deflection difference or exhibits an average displacement difference between the first flap and the second flap; wherein the flap pair operates at an ultrasonic frequency, such that the airflow generating device produces a plurality of air pulses at an ultrasonic pulse rate.

### Brief Description of the Drawings

FIG. 1 is a schematic diagram of a top view of an airflow generating device according to an embodiment of the present application.
FIG. 2 is a schematic diagram of a cross-sectional view of an airflow generating device according to an embodiment of the present application.
FIG. 3 illustrates membrane movement of an airflow generating device according to an embodiment of the present application.
FIG. 4 illustrates driving signals according to an embodiment of the present application.
FIG. 5 is a schematic diagram of an airflow generating device according to an embodiment of the present application.
FIG. 6 is a schematic diagram of airflow generating devices according to an embodiment of the present application.
FIG. 7 is a schematic diagram of an airflow generating device according to an embodiment of the present application.
FIG. 8 is a schematic diagram of an appearance of an airflow generating device according to an embodiment of the present application.
FIG. 9 is a schematic diagram of an airflow generating device according to an embodiment of the present application.
FIG. 10 is a schematic diagram of an airflow generating device according to an embodiment of the present application.
FIG. 11 is a schematic diagram of an airflow generating device according to an embodiment of the present application.
FIG. 12 is a schematic diagram of an APG device according to an embodiment of the present invention.
FIG. 13 is a schematic diagram of a cross-sectional view of the airflow generating device according to an embodiment of the present application.
FIG. 14 is a schematic diagram of signal waveforms according to an embodiment of the present application.
FIG. 15 is a schematic diagram of an appearance of an airflow generating device according to an embodiment of the present application.

### Detailed Description

Content of US Patent No. 12,356,141 and Application No. 19/424,094 is incorporated herein by reference.

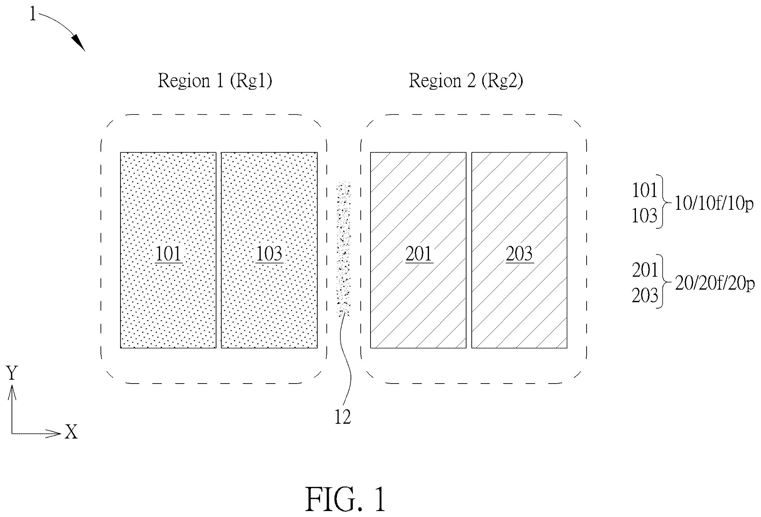

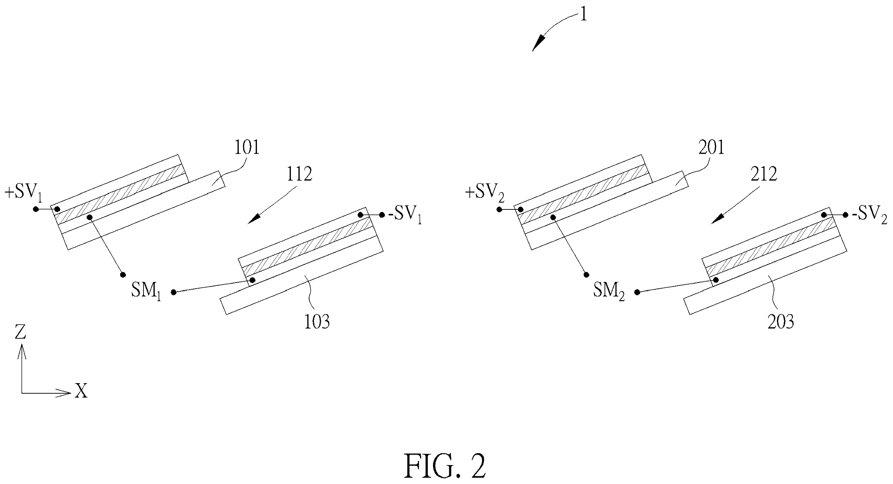

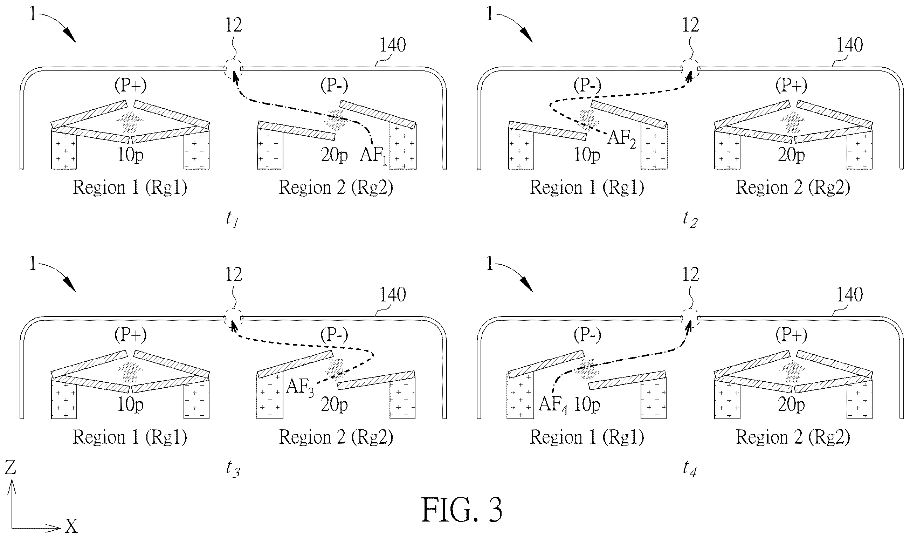

FIG. 1 is a schematic diagram of a top view of an airflow generating device 1 (especially membrane portion) according to an embodiment of the present application. FIG. 2 is a schematic diagram of a cross-sectional view of the airflow generating device 1 (especially membrane portion) according to an embodiment of the present application. FIG. 3 illustrates membrane movement of the airflow generating device 1 (including covering structure 140) according to an embodiment of the present application. The airflow generating device 1 comprises a first cell 10 and a second cell 20. Each of the cells 10 and 20 are MEMS fabricated air pulse generating device, having structure similar to US Patent No. 12,356,141. The first cell 10 is disposed within a first region Rg1 (or Region 1), and the second cell 20 is disposed within a second region Rg2 (or Region 2). As will be seen, the present invention exploits cell(s) in Region 1 and cell(s) in Region 2 to create air pressure difference, so as to produce airflow.

Specifically, the cell 10/20 comprise a film structure (or membrane) 10f/20f. In the embodiment shown in FIG. 1, the film structure 10f/20f comprises a flap pair 10p/20p, and the flap pair 10p/20p comprises a first flap 101/201 and a second flap 103/203 opposite to each other.

The flap pair 10p/20p may receive a common-mode signal SM₁/SM₂ (a.k.a., modulation driving signal) to perform a (first/second) common-mode movement. The flap pair 10p/20p may also receive a pair of differential-mode signals ±SV₁/±SV₂ to perform a (first/second) differential-mode movement. In the embodiment shown in FIG. 1 and FIG. 2, the flap pair 10p/20p performs the common-mode movement and the differential-mode movement simultaneously. In fact, actually membrane movement of the flap pair 10p/20p may be viewed as aggregation/combination of the common-mode movement and the differential-mode movement.

In an embodiment, as shown in FIG. 2, the flap pair 10p/20p receives the differential-mode signals ±SV₁/±SV₂ via top electrodes of corresponding actuators and receives the common-mode signal SM₁/SM₂ via bottom electrodes of the corresponding actuators.

The flap pair 10p/20p with opposite flaps 101/201 and 103/203 performs the first/second differential-mode movement for a first/second virtual valve 112/212. The first/second virtual valve 112/212 is considered as "opened" when a displacement difference of the flaps 101/201 and 103/203 is greater than a flap/membrane thickness. The first/second virtual valve 112/212 is considered as "closed" when the displacement difference of the flaps 101/201 and 103/203 is less than the flap/membrane thickness.

In an embodiment, as taught in the No. 12,356,141, the virtual valve is closed during the differential-mode movement is in transition, which means that the virtual valve is closed during transition time period of the first and second flaps performing the differential-mode movement, but not limited thereto. In an embodiment, the virtual valve may be in closed status corresponding to reversal of flap/membrane movement within the differential-mode movement, which is also within the scope of the present invention.

Operational principles of each cell can be referred to US Patent No. 12,356,141, for reference (but not for limitation(s)).

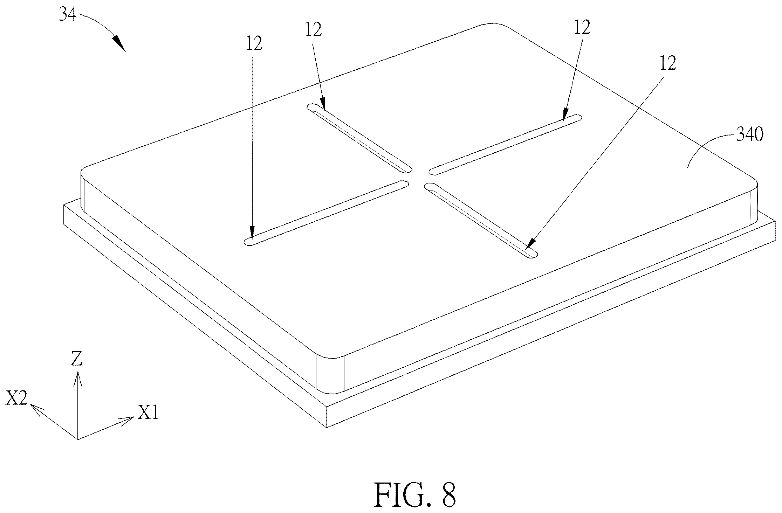

In FIG. 3, covering structure 140, configured to cover the flap pair 10p/20p, is illustrated. Within the covering structure 140, an opening 12 is formed between the first region Rg1 and the second region Rg2, and may have an elongated shape (as shown in FIG. 8). In FIG. 1, (a projection of) the opening 12 is also shown, which is between the first region Rg1 and the second region Rg2.

FIG. 3 illustrates membrane movement of the airflow generating device 1 at times *t*₁, *t*₂, *t*₃, *t*₄ according to an embodiment of the present application.

At time *t*₁, the first cell 10 or the first flap pair 10p performs the first common-mode movement upward and performs the first differential-mode movement such that the first virtual valve 112 is closed. The second cell 20 or the second flap pair 20p performs the second common-mode movement downward and performs the second differential-mode movement such that the second virtual valve 212 is opened. The first common-mode movement moving upward compresses a first volume of/over the first region Rg1 and creates positive air pressure P+ in/over the first region Rg1. The second common-mode movement moving downward expands a second volume of the second region Rg2 and creates negative air pressure P- in/over the second region Rg2. The second differential-mode movement causing the second virtual valve 212 opened allows an airflow AF₁ flowing through the openings 212, 12 toward +Z direction.

At time *t*₂, the first cell 10 or the first flap pair 10p performs the first common-mode movement downward and performs the first differential-mode movement such that the first virtual valve 112 is opened. The second cell 20 or the second flap pair 20p performs the second common-mode movement upward and performs the second differential-mode movement such that the second virtual valve 212 is closed. The second common-mode movement moving upward compresses the second volume of/over the second region Rg2 and creates positive air pressure P+ in/over the second region Rg2. The first common-mode movement moving downward expands the first volume of the first region Rg1 and creates negative air pressure P-in/over the first region Rg1. The first differential-mode movement causing the first virtual valve 112 opened allows an airflow AF₂ flowing through the openings 112, 12 toward +Z direction.

At time *t*₃, the first cell 10 or the first flap pair 10p performs the first common-mode movement upward and performs the first differential-mode movement such that the first virtual valve 112 is closed. The second cell 20 or the second flap pair 20p performs the second common-mode movement downward and performs the second differential-mode movement such that the second virtual valve 212 is opened. The first common-mode movement moving upward compresses the first volume of/over the first region Rg1 and creates positive air pressure P+ in/over the first region Rg1. The second common-mode movement moving downward expands the second volume of the second region Rg2 and creates negative air pressure P- in/over the second region Rg2. The second differential-mode movement causing the second virtual valve 212 opened allows an airflow AF₃ flowing through the openings 212, 12 toward +Z direction.

At time *t*₄, the first cell 10 or the first flap pair 10p performs the first common-mode movement downward and performs the first differential-mode movement such that the first virtual valve 112 is opened. The second cell 20 or the second flap pair 20p performs the second common-mode movement upward and performs the second differential-mode movement such that the second virtual valve 212 is closed. The second common-mode movement moving upward compresses the second volume of/over the second region Rg2 and creates positive air pressure P+ in/over the second region Rg2. The first common-mode movement moving downward expands the first volume of the first region Rg1 and creates negative air pressure P-in/over the first region Rg1. The first differential-mode movement causing the first virtual valve 112 opened allows an airflow AF₄ flowing through the openings 112, 12 toward +Z direction.

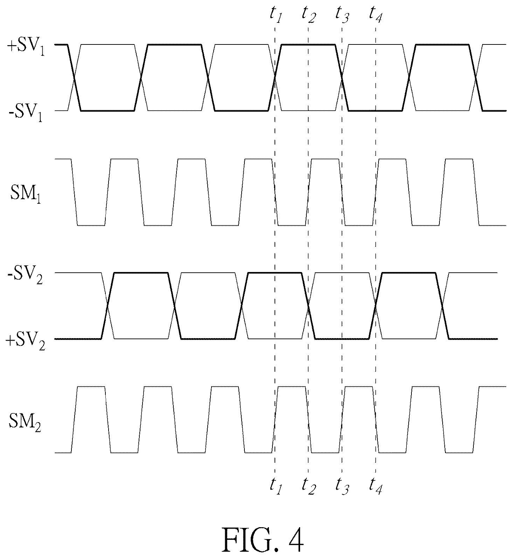

Membrane movement shown in FIG. 3 can be achieved by applying (driving) signals SM₁, SM₂, ±SV₁, ±SV₂ shown in FIG. 4. Signal set (SM_{1/2}, ±SV_{1/2}) may be referred to US Patent No. 12,356,141. A differential-mode frequency of the differential-mode signal ±SV may be a half (or even a quarter) of the common-mode frequency of the common-mode signal SM.

In the embodiment shown in FIG. 4, the differential-mode signal ±SV₁ and the differential-mode signal ±SV₂ may have a phase difference of π/4 (but not limited thereto); the common-mode signal SM₁ and the common-mode signal SM₂ may have a phase difference of π/2 (but not limited thereto).

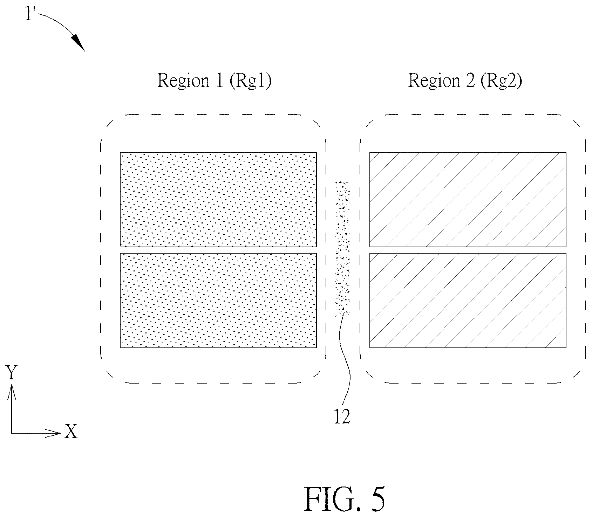

FIGs. 5-7 illustrate top view of airflow generating devices 1', 2, 2' and 3 according to an embodiment of the present application. For the airflow generating devices 1, 1', 2 and 2', where the airflow generating device may be solely partitioned into two regions, cell(s) disposed within Region 1 and receiving a first signal set (SM₁, ±SV₁) may be considered as first cell(s), and cell(s) disposed within Region 2 and receiving a second signal set (SM₂, ±SV₂) may be considered as second cell(s).

In FIG. 5, slit formed between opposite first and second flaps within the first/second cell of airflow generating device 1' is perpendicular to the opening 12, which is also within the scope of the present invention.

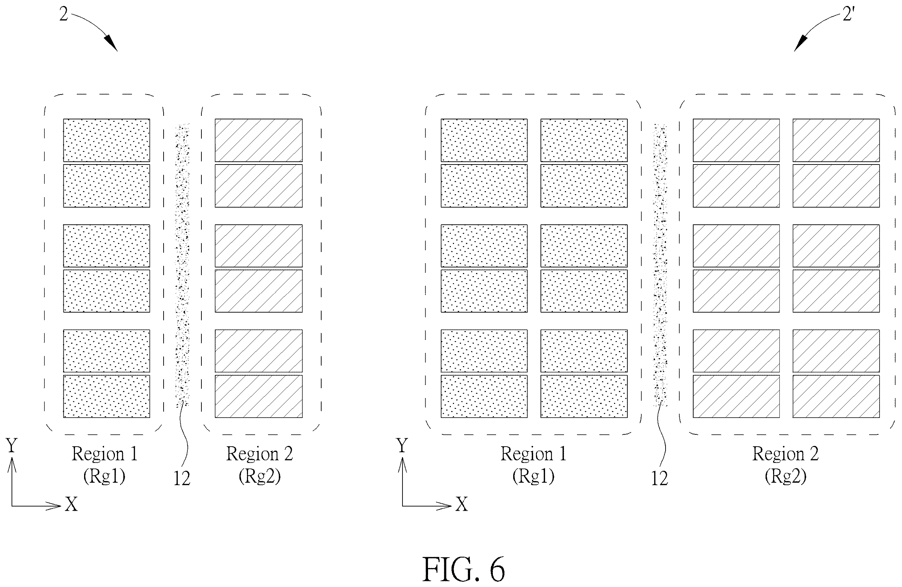

In FIG. 6, in Region 1 there might be a plurality of first cells and in Region 2 there might be a plurality of second cells. The plurality of first/second cells may be arranged as array, which is also within the scope of the present invention.

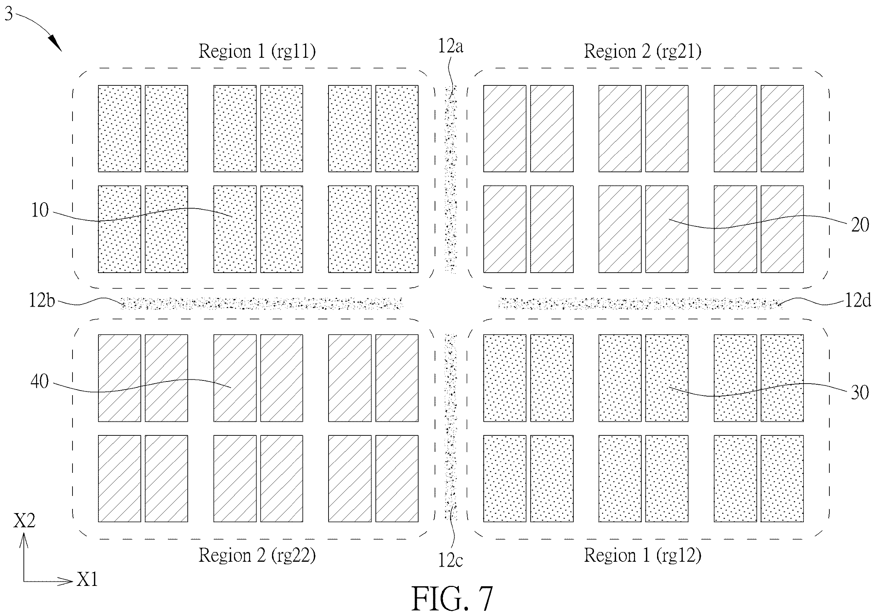

In FIG. 7, cells receiving the first signal set (SM₁, ±SV₁) may be adjacent to cells receiving the second signal set (SM₂, ±SV₂) both in a first direction (e.g., X1) and a second direction (e.g., X2) perpendicular to the first direction (and vice versa). For example, first cells 10 in a sub-region rg11 of Region 1 are adjacent to second cells 20 in a sub-region rg21 of Region 2 in the first direction X1, and the first cells 10 in the sub-region rg11 of Region 1 are adjacent to fourth cells 40 in a sub-region rg22 of Region 2 in the second direction X2 (perpendicular to first direction X1). Similarly, third cells 30 in a sub-region rg12 of Region 1 are adjacent to the fourth cells 40 in the sub-region rg22 of Region 2 in the first direction X1, and the third cells 30 in the sub-region rg12 of Region 1 are adjacent to the second cells in the sub-region rg21 of Region 2 in the second direction X2.

In an embodiment, the first cells in the sub-region rg11 and the third cells in the sub-region rg12 of Region 1 all receives the first signal set (SM₁, ±SV₁), and the second cells in the sub-region rg21 of Region 2 and the second/fourth cells in the sub-region rg22 of Region 2 all receives the second signal set (SM₂, ±SV₂).

The openings 12 may be arranged between Region 1 and Region 2. Specifically, the openings 12 may be arranged between sub-region rg11 of Region 1 and sub-region rg21 of Region 2, between sub-region rg11 of Region 1 and sub-region rg22 of Region 2, between sub-region rg12 of Region 1 and sub-region rg22 of Region 2, and/or between sub-region rg12 of Region 1 and sub-region rg21 of Region 2.

Note that, FIG. 7 is for illustration purpose. Each sub-region (e.g., rg11, rg12, rg21, rg22) may comprise only one cell, which is within the scope of the present invention.

FIG. 8 is a schematic diagram of an appearance of an airflow generating device 34 according to an embodiment of the present application. The airflow generating device 34 comprises a covering structure (e.g., a lid) 340. In the covering structure 340 the openings 12 may be formed, where the openings 12 may have elongated shapes. The elongated openings 12 may partition the airflow generating device 34 into sub-regions rg11, rg12, rg21 and rg22 as shown in FIG. 7, where the covering structure 340 may be used to cover or disposed over the airflow generating device 3 shown in FIG. 7 to form the airflow generating device 34.

An advantage of the present invention is airflow (volume) of the present invention may be scaled up by simply incorporating more cells and extending cells and openings (specifically openings 12) arrangement toward directions X1 and/or X2, which allows the design more flexible to meeting various requirements, and would be more robust to assembly variation and easier to array implementation compared to previous architecture.

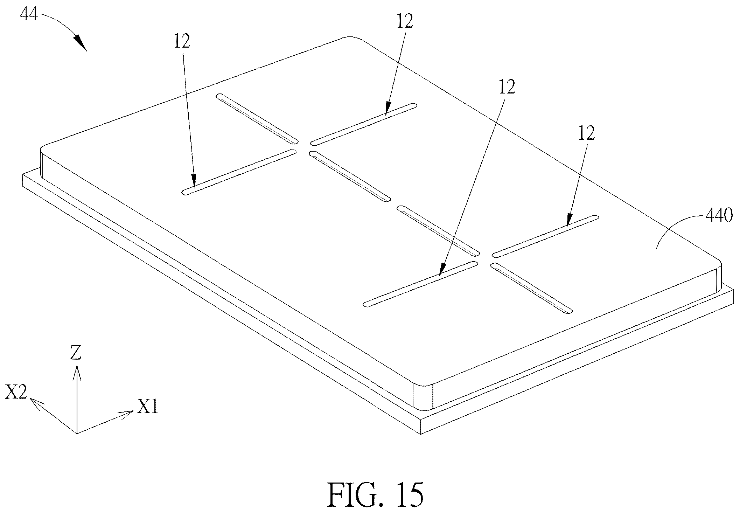

For example, FIG. 15 is a schematic diagram of an appearance of an airflow generating device 44 according to an embodiment of the present application. The airflow generating device 44 comprises a covering structure (e.g., a lid) 440. In the covering structure 440 the openings 12 may be formed, where the openings 12 may have elongated shapes. The airflow generating device 44 may be regarded as an extended version of the airflow generating device 34.

Another advantage of the present invention is double differential mode (e.g., airflow generating device 34) would be less ultrasonic energy leakage, compared to previous design, which might bring better airflow performance.

For example, in a simulation three configurations are compared. In the simulation, cell arrangement which is similar to the airflow generating device 3 is considered. First configuration is "common mode", where all cells receive one common signal set (SM, ±SV) (subscript is neglected herein). Second configuration is "differential mode", where cells in subregions rg11 and rg22 (e.g., cell 10 and 40) receives the first signal set (SM₁, ±SV₁) and cells in subregions rg21 and rg12 (e.g., cell 20 and 30) receives the second signal set (SM₂, ±SV₂). Final configuration is "double differential mode", where cells in subregions rg11 and rg12 (e.g., cell 10 and 30) receives the first signal set (SM₁, ±SV₁) and cells in subregions rg21 and rg22 (e.g., cell 20 and 40) receives the second signal set (SM₂, ±SV₂).

In the simulation, "common mode", "differential mode", and "double differential mode" produce airflow (volume velocity) of 45 cc/sec., 54 cc/sec. and 58 cc/sec. (cubic centimeters per second), respectively. As can be seen, "differential mode" configuration (corresponding to present invention) is better than "common mode" (corresponding to previous design which can be regarded as an extension of No. 12,356,141) in terms of airflow or volume velocity performance. Furthermore, the "double differential mode" configuration is even better than "differential mode". In other words, it is validated that both "differential mode" and "double differential mode" improve airflow or volume velocity performance over prior art.

Note that, the embodiments shown in the above are one flap pair performing both common-mode movement and differential-mode movement (simultaneously), which is not limited thereto.

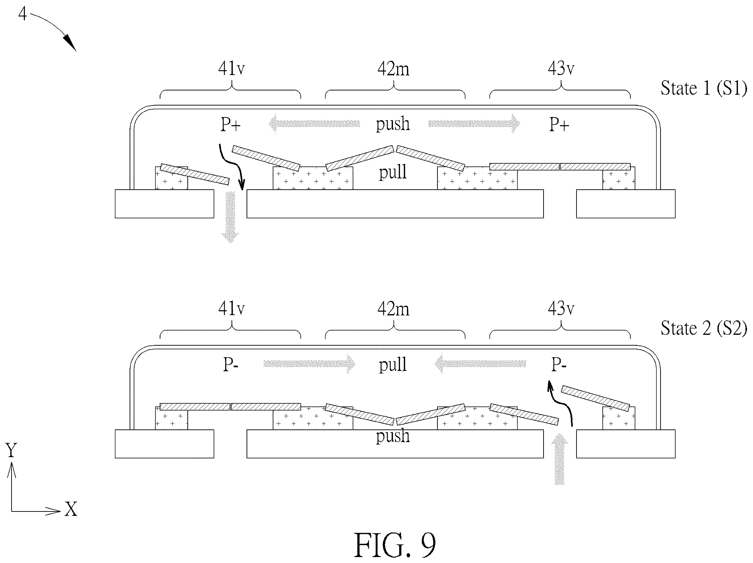

FIGs. 9-11 illustrate airflow generating devices 4-6 according to an embodiment of the present application.

In FIG. 9, the airflow generating device 4 comprises flap pairs 41v, 42m and 43v. The flap pair 42m (solely/mainly) performs common-mode movement to push or pull the volume above/under the flap pair 42m, resulting in positive air pressure P+ and/or negative air pressure P- (especially within the chamber illustrated). The flap pairs 41v and 43v (solely/mainly) perform differential-mode movement. Timing of the common-mode movement of the flap pair 42m and the differential-mode movement of the flap pairs 41v and 43v are synchronized. Therefore, airflow to/from the airflow generating device 4 may be generated.

In an embodiment, the differential-mode frequency may be a half/quarter of the common-mode frequency, so that the opening can always happen at high/low pressure in the enclosure chamber, leading to one-directional airflow pumping.

In an embodiment, the chamber surface may be attached to a heat source or fin structure, such that the air within the chamber may be heated up by the external heat source and blow away, and heat of the heat source may be dissipated.

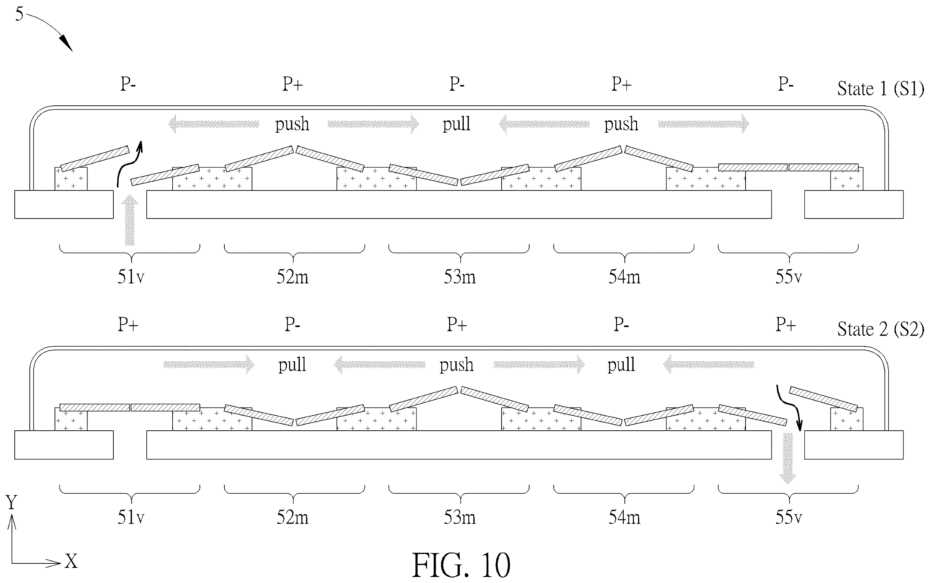

In FIG. 10, the airflow generating device 5 comprises flap pairs 51v, 52m, 53m, 54m and 55v. The flap pairs 52m, 53m and 54m (solely/mainly) perform common-mode movement to push or pull the volume above the flap pairs 52m, 53m and 54m, resulting in positive/negative air pressure P+/P-. The flap pairs 51v and 55v (solely/mainly) perform differential-mode movement, synchronized with the common-mode movement.

The pressure and airflow inside the chamber is similar to a forced swirling system, and it will help to increase the equivalent heat convection coefficient of the air in the chamber, helping exhale higher temperature when the top surface is attached to a heat source.

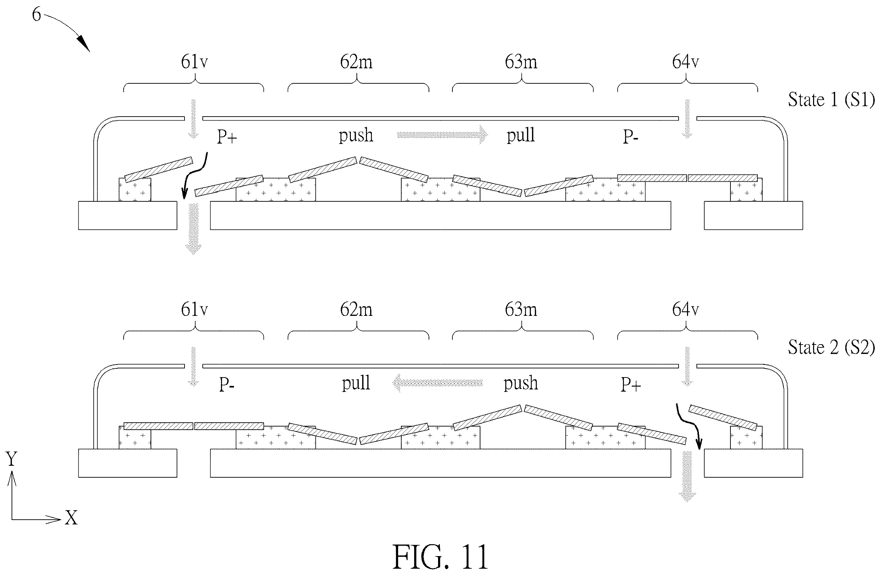

In FIG. 11, the airflow generating device 6 comprises flap pairs 61v, 62m, 63m and 64v. The flap pairs 62m and 63m (solely/mainly) perform common-mode movement to push or pull the volume above the flap pairs 62m and 63m, resulting in positive/negative air pressure P+/P-. The flap pairs 61v and 64v (solely/mainly) perform differential-mode movement, synchronized with the common-mode movement.

Taking advantage of acoustic mode in the chamber, two push-pull flap pairs 62m and 63m can drive the chamber pressure into acoustic resonance. Controlling the valve open time to be synchronized with the ultrasound acoustic pressure difference would generate the airflow. Even number of flap pairs performing common-mode movements (e.g., 62m and 63m) or even number of flap pairs performing differential-mode movements (e.g., 61v and 64v) may allow possibility of energy recycle in electrical/mechanical/acoustic domain, which may make the system more efficient.

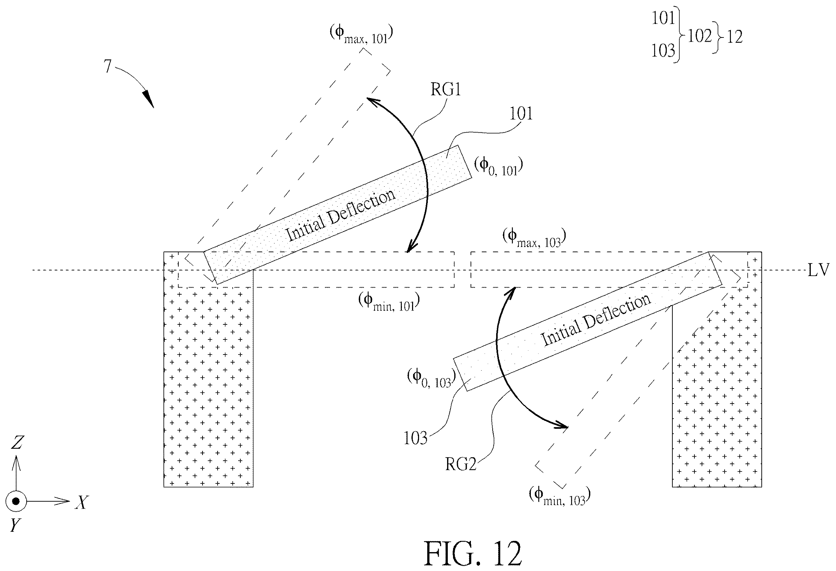

In addition, to achieve better driving and airflow-producing efficiency, Asymmetric initial deflection for air pulse generating (APG) device, disclosed in Application No. 19/424,094 and excerpted in FIG. 12, may be incorporate into the airflow generating device of the present invention.

FIG. 12 illustrates a schematic diagram of an APG device 7 according to an embodiment of the present invention. The APG device 7 comprises a film structure 12, the film structure 12 comprises a flap pair 102. The flap pair 102 comprises a first flap 101 and a second flap 103 opposite to each other. As shown in FIG. 12, (most of the time) the first flap 102 is actuated to bend upward (+Z direction or above level LV) while the second flap 103 is actuated to bend downward (-Z direction or below level LV).

The flap pair 102 possesses an initial deflection difference or exhibits an average displacement difference between the flaps 101 and 103, where the initial deflection difference or the average displacement difference is larger than a thickness of the film structure 12. As shown in FIG. 12, the flap 101 initially deflects at an initial position *ϕ*_{0,101} and the flap 103 initially deflects at an initial position *ϕ*_{0,103}. Furthermore, the flap 101 swings over a range RG1 between positions *ϕ*_{min,101} and *ϕ*_{max,101}, expressed as RG1 = [*ϕ*_{min,101}, *ϕ*_{max,101}], and the flap 103 swings over a range RG2 between positions *ϕ*_{min,103} and *ϕ*_{max,103}, expressed as RG2 = [*ϕ*_{min,103}, *ϕ*_{max,103}]. Herein, *ϕ*·,*ₓ* may be considered as (angular) position of tip of flap x with respect to its anchor. When the flap 101 swings to position *ϕ*_{min,101} and the flap 103 swings to position *ϕ*_{max,103}, the virtual valve 112 is considered as closed. In one embodiment, position *ϕ*_{min,101} and position *ϕ*_{max,103} may align with a certain horizontal level LV shown in FIG. 12. Swing range RG1 of the flap 101 is (substantially) above the level LV and swing range RG2 of the flap 103 is (substantially) below the level LV.

As the APG device taught by Applicant, the flap pair 102 operates at an ultrasonic frequency, such that the airflow generating device produces a plurality of air pulses at an ultrasonic pulse rate. The flap pair 102 performs a differential-mode movement, to form a virtual valve or an opening at an opening frequency, and a common-mode movement, to form an ultrasonic air pressure variation.

Different from the APG devices with symmetric deflection, for the APG devices with Asymmetric deflection (such as the APG 7), a common-mode frequency F_{M} corresponding to the common-mode movement and a differential-mode frequency F_{V} corresponding to the differential-mode movement are the same, i.e., F_{V} = F_{M}, where F_{V} would be the opening frequency and the frequencies F_{V} and F_{M} would be the ultrasonic pulse rate. Furthermore, to achieve resonance gain, both the common-mode frequency F_{M} and the differential-mode frequency F_{V} approach a resonance frequency Fr of the flap pair 102, i.e., F_{V} = F_{M} ≈ Fr. Herein, "approach" means the frequency F_{V} or F_{M} is so close to the resonance frequency Fr such that a certain displacement/resonance gain (e.g., 10 times or more than 10 times) is obtained. Practically/usually, resonance gain of 20-30 times (or above) is pursued, but not limited thereto.

Herein, the common-mode frequency F_{M} and the differential-mode frequency F_{V} may refer to frequency of the common-mode signal (also known as modulation driving signal) SM and differential-mode signal (also known as demodulation driving signal) SV, respectively.

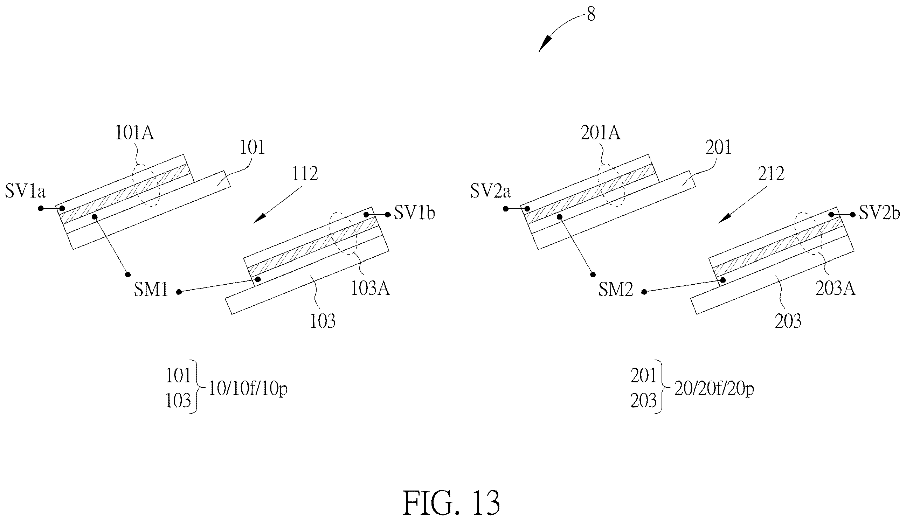

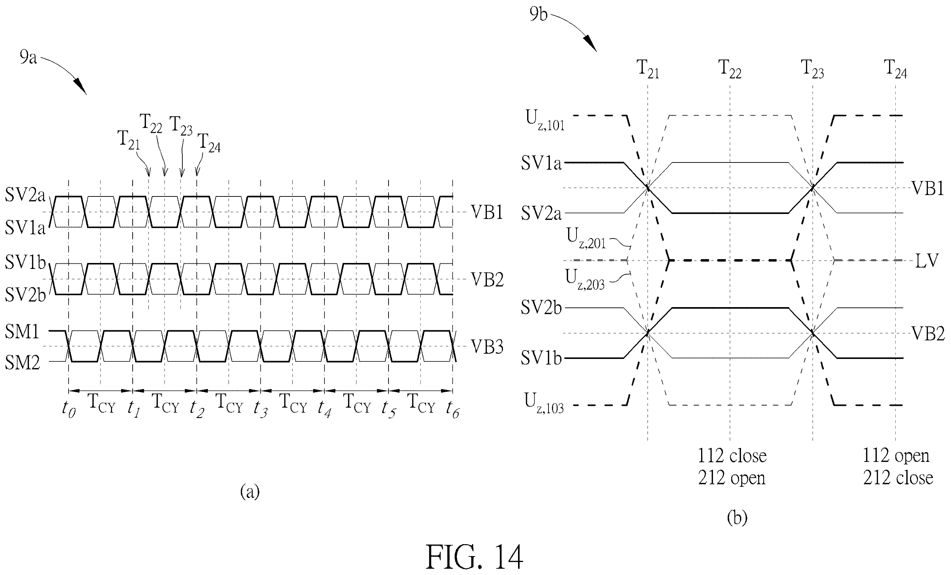

FIG. 13 is a schematic diagram of a cross-sectional view of the airflow generating device 8 (especially membrane portion) according to an embodiment of the present application. The airflow generating device 8 shown in FIG. 13 is similar to the airflow generating device 1 shown in FIG. 2, especially in static membrane structure. Some notations of the airflow generating devices 1 are retained for the airflow generating devices 8. Difference between the airflow generating devices 1 and 8 is the driving scheme or the dynamic membrane movement. A driving scheme 9a/9b for the airflow generating devices 8 is illustrated in FIG. 14.

As shown in FIG. 13, the airflow generating device 8 comprises the cells 10 and 20, the cell 10/20 comprise film structure (or membrane) 10f/20f, the film structure 10f/20f comprises a flap pair 10p/20p, and the flap pair 10p/20p comprises a first flap 101/201 and a second flap 103/203 opposite to each other. The airflow generating device 8 also comprises actuator 101A/103A/201A/203A disposed on the flap 101/103/201/203. In the embodiment shown in FIG. 13, top electrodes of the actuators 101A, 103A, 201A, 203A receive differential-mode signals SV1a, SV1b, SV2a, SV2b, respectively, bottom electrode of 101A/103A receives a common-mode signal SM1, and bottom electrode of 201A/203A receives a common-mode signal SM2. (Driving) signals SV1a, SV1b, SV2a, SV2b, SM1 and SM2 are illustrated in FIG. 14.

The flaps 101 and 103 are driven by differential-mode signals SV1a and SV1b, respectively, to form a virtual valve 112; while the flaps 201 and 203 are driven by differential-mode signals SV2a and SV2b, respectively, to form a virtual valve 212. The differential-mode signal SV1a/ SV2a comprises a bias voltage VB1 and the differential-mode signal SV1b/ SV2b comprises a bias voltage VB2. To maintain initial deflection, the bias voltage VB1 is different from the bias voltage VB2, i.e., VB1 ≠ VB2.

At time T₂₂, the differential-mode signal SV1a has negative polarity with respect to the bias voltage VB1 and the differential-mode signal SV1b has positive polarity with respect to the bias voltage VB2, such that the virtual valve 112 is closed.

At time T₂₂, the differential-mode signal SV2a has positive polarity with respect to the bias voltage VB1 and the differential-mode signal SV2b has negative polarity with respect to the bias voltage VB2, such that the virtual valve 212 is open.

At time T₂₄, the differential-mode signal SV1a has positive polarity with respect to the bias voltage VB1 and the differential-mode signal SV1b has negative polarity with respect to the bias voltage VB2, such that the virtual valve 112 is open.

At time T₂₄, the differential-mode signal SV2a has negative polarity with respect to the bias voltage VB1 and the differential-mode signal SV2b has positive polarity with respect to the bias voltage VB2, such that the virtual valve 212 is closed.

In other words, the virtual valve 112/212 is closed during a time corresponding to a first reversal of a first flap movement of the first flap 101/201 and a second reversal of a second flap movement of the second flap 103/203.

In addition, the differential-mode signals SV1a and SV2a are (considered as) anti-podal with respect to the bias voltage VB1, and the differential-mode signals SV1b and SV2b are (considered as) anti-podal with respect to the bias voltage VB2. Furthermore, the common-mode signals SM1 and SM2 are (considered as) anti-podal with respect to the bias voltage VB3 (referring to differential-SM scheme).

Details of Asymmetric initial deflection may be referred to Application No. 19/424,094, which are not narrated herein for brevity.

Asymmetric initial deflection may be applied to the cell arrangement shown in FIG. 7. For example, the first cells 10 in the sub-region rg11 and the third cells 30 in the sub-region rg12 of Region 1 all receives a first signal set (SM1, SV1a, SV1b), and the second cells 20 in the sub-region rg21 of Region 2 and the fourth cells 40 in the sub-region rg22 of Region 2 all receives the second signal set (SM2, SV2a, SV2b), where the (driving) signals SV1a, SV1b, SV2a, SV2b, SM1 and SM2 are illustrated in FIG. 14 (referring to double differential-SM scheme).

In addition, (projections of) openings 12a, 12b, 12c and 12d (or simply 12) are formed between the sub-regions rg11 and rg21, between the sub-regions rg11 and rg22, between the sub-regions rg22 and rg12, and between the sub-regions rg12 and rg21, respectively.

In summary, the present invention features an integration of (double) differential-SM and Asymmetric initial deflection. By intentionally pre-biasing or offsetting the flap equilibrium, the system transcends traditional mechanical constraints, allowing the common-mode and differential-mode frequencies to harmonize at a singular resonance point. The quasi-static (Asymmetric) offset thereby unlocks a magnitude of airflow volume velocity that symmetric topologies cannot reach, thereby establishing that an initial deviation is the catalyst for unprecedented operational efficiency.

## Claims

1. An airflow generating device, **characterised by,** comprising:
a first cell, disposed within a first region; and
a second cell, disposed within a second region;
wherein the first cell generates a first air pressure with a first polarity in the first region and the second cell generates a second air pressure with a second polarity in the second region;
wherein the second polarity is opposite to the first polarity;
wherein at least one of the first and second cells comprises a film structure, the film structure comprises a flap pair, the flap pair comprises a first flap and a second flap opposite to each other;
wherein the flap pair possesses an initial deflection difference or exhibits an average displacement difference between the first flap and the second flap;
wherein the flap pair operates at an ultrasonic frequency, such that the airflow generating device produces a plurality of air pulses at an ultrasonic pulse rate.

2. The airflow generating device of claim 1,
**characterised in that,** the initial deflection difference or the average displacement difference is larger than a thickness of the film structure.

3. The airflow generating device of claim 1 or 2,
**characterised in that,** the flap pair performs a differential-mode movement, to form a virtual valve or an opening at an opening frequency.

4. The airflow generating device of any of claims 1-3,
**characterised in that,** the flap pair is driven according to a differential-mode frequency to perform a differential-mode movement;
wherein the differential-mode frequency is the ultrasonic pulse rate.

5. The airflow generating device of any of claims 1-4,
**characterised in that,** the flap pair performs a common-mode movement, to form an ultrasonic air pressure variation.

6. The airflow generating device of any of claims 1-5,
**characterised in that,** a common-mode frequency corresponding to a common-mode movement and a differential-mode frequency corresponding to a differential-mode movement are the same.

7. The airflow generating device of any of claims 1-6,
**characterised in that,** both a common-mode frequency and a differential-mode frequency approach a resonance frequency of the flap pair.

8. The airflow generating device of any of claims 1-7,
**characterised in that,** a virtual valve (112) is closed during a time corresponding to a first reversal of a first flap movement of the first flap and a second reversal of a second flap movement of the second flap.

9. The airflow generating device of any of claims 1-8,
**characterised in that,** the first flap (101) is driven by a first differential-mode signal (SV1a) and the second flap (103) is driven by a second differential-mode signal (SV1b), to form a virtual valve;
wherein the first differential-mode signal (SV1a) comprises a first bias voltage (VB1) and the second differential-mode signal (SV1b) comprises a second bias voltage (VB2);
wherein the first bias voltage is different from the second bias voltage.

10. The airflow generating device of any of claims 1-9,
**characterised in that,** a first differential-mode signal (SV1a) has a first polarity with respect to a first bias voltage and a second differential-mode signal (SV1b) has a second polarity with respect to a second bias voltage;
wherein the first polarity and the second polarity are opposite to each other.

11. The airflow generating device of any of claims 1-10,
**characterised in that,** the first flap and the second flap are driven by a common-mode signal, to perform a common-mode movement to form a pressure variation;
wherein a differential-mode frequency corresponding to a first differential-mode signal and a common-mode frequency corresponding to a common-mode signal are the same.

12. The airflow generating device of any of claims 1-11, **characterised by,** comprising:
a first actuator disposed on the first flap and a second actuator disposed on the second flap;
wherein the first actuator comprises a first electrode and a second electrode, and the second actuator comprises a third electrode and a fourth electrode;
wherein the first electrode receives a first differential-mode signal and the third electrode receives a second differential-mode signal;
wherein the second electrode and the fourth electrode receive the common-mode signal.

13. The airflow generating device of any of claims 1-12,
**characterised in that,** the first cell comprises a first flap pair and the second cell comprises a second flap pair;
wherein the first flap pair comprises the first flap and the second flap, and the second flap pair comprises a third flap and a fourth flap;
wherein the first flap is driven by a first differential-mode signal (SV1a), the second flap is driven by a second differential-mode signal (SV1b), the third flap is driven by a third differential-mode signal (SV2a), the fourth flap is driven by a fourth differential-mode signal (SV2b), to form a first virtual valve (112) and a second virtual valve (212);
wherein the first differential-mode signal (SV1a) and the third differential-mode signal (SV2a) comprise a first bias voltage (VB1);
wherein the second differential-mode signal (SV1b) and the fourth differential-mode signal (SV2b) comprise a second bias voltage (VB2);
wherein the first bias voltage is different from the second bias voltage;
wherein the first differential-mode signal (SV1a) and the third differential-mode signal (SV2a) are anti-podal with respect to the first bias voltage;
wherein the second differential-mode signal (SV1b) and the fourth differential-mode signal (SV2b) are anti-podal with respect to the second bias voltage.

14. The airflow generating device of any of claims 1-13, **characterised by,** comprising:
a first actuator (101A) disposed on the first flap (101);
a second actuator (103A) disposed on the second flap (103);
a third actuator (201A) disposed on a third flap (201); and
a fourth actuator (203A) disposed on a fourth flap (203);
wherein the first cell comprises a first flap pair and the second cell comprises a second flap pair;
wherein the first flap pair comprises the first flap and the second flap, and the second flap pair comprises the third flap and the fourth flap;
wherein the first actuator comprises a first electrode receiving a first differential-mode signal (SVla);
wherein the second actuator comprises a second electrode receiving a second differential-mode signal (SV1b);
wherein the third actuator comprises a third electrode receiving a third differential-mode signal (SV2a);
wherein the fourth actuator comprises a fourth electrode receiving a fourth differential-mode signal (SV2b);
wherein the first actuator comprises a fifth electrode, the second actuator comprises a sixth electrode, the third actuator comprises a seventh electrode, the fourth actuator comprises an eighth electrode;
wherein the fifth electrode and the sixth electrode receive a first common-mode signal (SM1);
wherein the seventh electrode and the eighth electrode receive a second common-mode signal (SM2);
wherein the first common-mode signal (SM1) and the second common-mode signal (SM2) are anti-podal with respect to a third bias voltage (VB3).

15. The airflow generating device of any of claims 1-14, **characterised by,** comprising:
a third cell (30) and a fourth cell (40);
wherein the first cell (10) is disposed within a first sub-region (rg11) of the first region;
wherein the second cell (20) is disposed within a first sub-region (rg21) of the second region;
wherein the third cell (30) is disposed within a second sub-region (rg12) of the first region;
wherein the fourth cell (40) is disposed within a second sub-region (rg22) of the second region;
wherein the first sub-region of the first region is adjacent to the first sub-region of the second region in a first direction;
wherein the first sub-region of the first region is adjacent to the second sub-region of the second region in a second direction;
wherein the first and third cells are driven by a first differential-mode signal (SV1a), a second differential-mode signal (SV1b) and a first common-mode signal (SM1);
wherein the second and fourth cells receive a third differential-mode signal (SV2a), a fourth differential-mode signal (SV2b) and a second common-mode signal (SM2);
wherein the first differential-mode signal (SV1a) and the third differential-mode signal (SV2a) comprise a first bias voltage (VB1);
wherein the second differential-mode signal (SV1b) and the fourth differential-mode signal (SV2b) comprise a second bias voltage (VB2);
wherein the first bias voltage is different from the second bias voltage;
wherein the first differential-mode signal (SV1a) and the third differential-mode signal (SV2a) are anti-podal with respect to the first bias voltage (VB1);
wherein the second differential-mode signal (SV1b) and the fourth differential-mode signal (SV2b) are anti-podal with respect to the second bias voltage (VB2);
wherein the first common-mode signal (SM1) and the second common-mode signal (SM2) are anti-podal with respect to a third bias voltage (VB3).

16. The airflow generating device of any of claims 1-15, **characterised by,** comprising:
a third cell (30) and a fourth cell (40);
a covering structure, disposed over the first cell, the second cell, the third cell and the fourth cell;
wherein a first opening, a second opening, a third opening and a fourth opening are formed on the covering structure;
wherein the first opening (12a) is formed the between a first sub-region (rg11) of the first region and a first sub-region (rg21) of the second region;
wherein the second opening (12b) is formed between the first sub-region (rg11) of the first region and a second sub-region (rg22) of the second region;
wherein the third opening (12c) is formed the between the second sub-region (rg22) of the second region and a second sub-region (rg12) of the first region;
wherein the fourth opening (12d) is formed between the second sub-region (rg12) of the first region and the first sub-region (rg21) of the second region.

17. The airflow generating device of claim 1, **characterised by,** comprising:
a plurality of first cells (10), disposed in the first region; and
a plurality of second cells (20), disposed in the second region;
wherein the plurality of first cells is driven by a first common-mode signal (SM1);
wherein the plurality of second cells is driven by a second common-mode signal (SM2);
wherein the first common-mode signal (SM1) and the second common-mode signal (SM2) are anti-podal with respect to a third bias voltage (VB3).

18. The airflow generating device of claim 1, **characterised by,** comprising:
a plurality of first cells (10), disposed in a first sub-region (rgl 1) of the first region;
a plurality of second cells (20), disposed in a first sub-region (rg21) of the second region;
a plurality of third cells (30), disposed in a second sub-region (rg12) of the first region; and
a plurality of fourth cells (40), disposed in a second sub-region (rg22) of the second region;
wherein the plurality of first cells and the plurality of third cells are driven by a first common-mode signal (SM1);
wherein the plurality of second cells and the plurality of fourth cells are driven by a second common-mode signal (SM2);
wherein the first common-mode signal (SM1) and the second common-mode signal (SM2) are anti-podal with respect to a third bias voltage (VB3).
